(19) Europäisches Patentamt
European Patent Office
Office européen des brevets

(11) Publication number: 0 278 661 A1

# (12) EUROPEAN PATENT APPLICATION

(21) Application number: 88300864.1

(22) Date of filing: 02.02.88

(51) Int. Cl.4: C07F 9/18 , A01N 57/14

(30) Priority: 10.02.87 JP 28573/87
24.03.87 JP 70940/87

(43) Date of publication of application:
17.08.88 Bulletin 88/33

(84) Designated Contracting States:
CH DE FR GB IT LI NL

(71) Applicant: SUMITOMO CHEMICAL COMPANY, LIMITED
15 Kitahama 5-chome Higashi-ku
Osaka-shi Osaka 541(JP)

(72) Inventor: Sasaki, Mitsuru Professeur Henri B., KAGAN
Lab. Synthese Asymetrique Université de Paris-Sud
Centre d'Orsay, 91405 Orsay Cedex(FR)
Inventor: Takada, Yoji
4, Av. des Etats Unis
F-78000 Versailles(FR)
Inventor: Koyanagi, Rokuo
7-13, Hikarigaoka-1-chome
Takarazuku-shi(JP)

(74) Representative: Goldin, Douglas Michael et al
J.A. KEMP & CO. 14, South Square Gray's Inn
London WC1R 5EU(GB)

## (54) A thiophosphoric acid ester as an insecticide, nematocide and acaricide.

(57) S-tert-butyl O-ethyl O-phenyl phosphorothiolate of the formula:

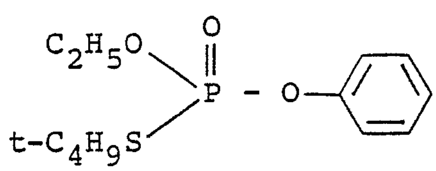

which is useful as an insecticide, nematocide and acaricide.

EP 0 278 661 A1

## A THIOPHOSPHORIC ACID ESTER AS AN INSECTICIDE, NEMATOCIDE AND ACARICIDE

The present invention relates to S-tert-butyl O-ethyl O-phenyl phosphorothiolate (hereinafter referred to as present compound), of the formula (I) shown below, its preparation and use.

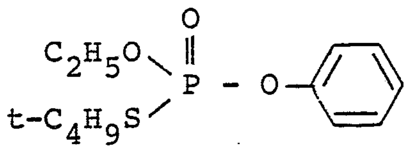

(I)

As organophosphorus insecticidal, nematocidal or acaricidal compounds, there are known phosphate compounds of the formula,

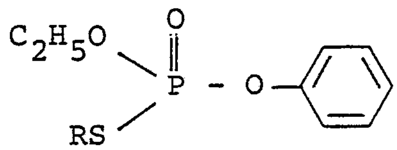

(II)

wherein R is n-propyl, i-propyl or sec-butyl, described in USP 4,028,438; 4,113,864; 4,242,333; Japanese Patent Publication No. 21768/1974, etc.

However, it may be said that these compounds don't always possess sufficient efficacy specially as soil insecticides and that acute toxicities of these compounds are high to warm-blood animals.

The present inventors conducted various studies to develop a new compound and found that the present compound has not only very excellent insecticidal, nematocidal and acaricidal activities to Lepidoptera such as rice stem borer (Chilo suppressalis Walker) and tobacco cutworm (Spodoptera litura Fabricius), Diptera such as house fly (Musca domestica vicina Macquart) and common mosquito (Culex pipiens pallens Coquilett), Diabrotica such as southern corn rootworm (Diabrotica undecimpunctaca howardi Barber), northern corn rootworm (Diabrotica longicornis Say), and western corn rootworm (Diabrotica virgifera Le Conte) and nematodes such as southern rootknot nematode (Meloidogyne incognita Kofoid et White), particularly to soil pests and nematoda which live in soil and eat various kinds of crops, flowers, lawn grasses, etc., thereby offering significantly higher efficacy than conventional compounds, but also it has extremely low toxicity to mouse.

Therefore, the present invention offers S-tert-butyl O-ethyl O-phenyl phosphorothiolate of the formula (I) shown below, its preparation and method of use of insecticides, nematocides and acaricides containing it as an active ingredient.

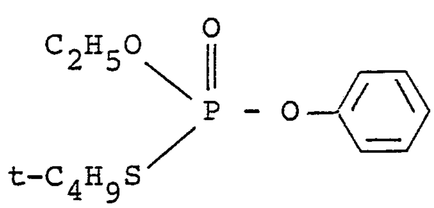

(I)

Below follows a detailed explanation of the preparation method. The present compound of the formula (I) can be prepared by the following method:

The present compound of the formula (I) can be prepared by treating O-ethyl O-phenyl phosphorochloridate with t-butylmercaptan in a solvent, in the presence of a base.

A typical example of the above preparation is as follows:

One equivalent of O-ethyl O-phenyl phosphorochloridothioate is treated with one to two equivalents of t-butylmercaptan in a solvent in the presence of a base at a temperature of -20°C to 40°C for one to twenty-four hours.

Aromatic hydrocarbons such as benzene, toluene, and xylene, ethers such as diethyl ether and

tetrahydrofuran and the like can be used as a solvent. And sodium hydride and potassium hydride and the like can be used as a base. After completion of the reaction and usual work-up, if necessary, purification of the product can be done by chromatography, distillation, etc.

The present compound can be used as an active ingredient of insecticides, nematocides or acaricides without adding any other ingredients. However, the compound can be formulated into granules, dusts, wettable powders, emulsifiable concentrates, oil sprays, aerosols, heating fumigants such as mosquito coil and mat, fogging fumigant, non-heating fumigant, poisonous bait and the like by being mixed with carriers, whether solid, liquid or gaseous, as well as surfactant, other auxiliary substances for formulation, baits, etc. or by being impregnanted into base materials of coils and mats, etc. These formulations contain 0.1 to 99.9% by weight of the present compound as an active ingredient.

For the solid carrier of the formulation can be used fine powders, granules, or the like of clays (e.g. kaolin clay, attapulgite clay, diatomaceous earth, synthetic hydrated silicon dioxide, Fubasami clay, bentonite, terra alba), talcs, other inorganic minerals (e.g. sericite, quartz powder, sulfur powder, activated carbon, calcium carbonate, hydrated silica), chemical fertilizers (e.g. ammonium sulfate, ammonium phosphate, ammonium nitrate, urea, ammonium chloride) and the like. For the liquid carrier can be used alcohols (e.g. methanol, ethanol), ketones (e.g. acetone, methyl ethyl ketone), aromatic hydrocarbons (e.g. benzene, toluene, xylene, ethylbenzene, methylnaphthalene), aliphatic hydrocarbons (e.g. n-hexane, cyclohexane, kerosene, petroleum ether), esters (e.g. ethyl acetate, butyl acetate), nitriles (e.g. acetonitrile, isobutyronitrile), ether (e.g. dioxane, diisopropyl ether), acid amides (e.g. dimethylformamide, dimethylacetamide), halogenated hydrocarbons (e.g. dichloroethane, trichloroethylene, carbon tetrachloride) and the like. For the gaseous carrier can be used freon gas, butane gas, carbon dioxide gas and the like.

For the surfactant can be used alkylsulfates, alkylsulfonates, alkylarylsulfonates, alkylaryl ethers and their polyoxyethylenized products, polyethylene glycol ethers, polyhydric alcohol esters, sugar alcohol derivatives and the like.

For the sticking agent and the dispersing agent can be used casein, gelatin, polysaccharides (e.g., starch powder, gum arabic, cellulose derivatives, alginic acid), lignin derivatives, bentonites, saccharides, synthetic water-soluble high polymers (e.g., polyvinyl alcohol, polyvinyl pyrrolidone, polyacrylic acids) and the like. For the stabilizer can be used PAP (isopropyl acid phosphate), BHT (2,6-di-tert-butyl-4-methylphenol), BHA (mixture of 2-tert-butyl-4-methoxyphenol and 3-tert-butyl-4-methoxyphenol), vegetable oils, mineral oils, surfactants, fatty acids and their esters, and the like.

The formulations obtained may be used, as they are or after dilution with water or in mixture with other insecticides, acarcides, nematocides, fungicides, herbicides, plant growth regulators, fertilizers or soil improvers, etc.

When the present compound is used as an active ingredient for insecticides, nematocides or acaricides, its dosage is usually 100 to 10,000 g a.i./ha, and the concentration is 10 to 1,000 ppm if to be diluted with water in the form of emulsifiable concentrate, wettable powder or the like.

These dosage and concentration vary with the kind of formulation, application time, application place, application method, species of pests, degree of damage and the like, and may be increased or decreased irrespective of the range of figures given above.

Examples of preparation, formulation, and tests are shown below to describe the present invention in detail, but the present invention is in no way limited to such examples.

Preparation Example

To a stirred solution of 4.0 g of 60% sodium hydride in 80 ml of tetrahydrofuran was added dropwise 9.0 g (0.1 mol) of t-butylmercaptan at the temperature of 20 to 25°C under nitrogen stream. The mixture was kept at the temperature of 35 to 40°C for two hours. Then the reaction mixture was cooled at 0 to 5°C, and 22.0 g (0.1 mol) of O-ethyl O-phenyl phosphorochloridate in 30 ml of toluene was added thereto. After the mixture was kept at 20 to 25°C for six hours, the solvent was evaporated under reduced pressure. To the residue 150 ml of methylene dichloride was added.

The resulting solution was washed with water (100 ml × 2), dried over anhydrous magnesium sulfate and filtered. The filtrate was concentrated in vacuo and the residue was chromatographed over a silica gel to give 22.7 g of S-t-butyl O-ethyl O-phenyl phosphorothiolate (Yield 83.0%); $n_D^{27.0}$ 1.5122.

Formulation examples are shown below. All parts are expressed in terms of weight.

Formulation Example 1 Emulsifiable Concentrate

Forty parts of the present compound is dissolved into 50 parts of xylene and thereto added 10 parts of emulsifier Sorpol SM-200 (Trade mark registered by Toho Chemical Co., mixture of polyoxyethylene alkylaryl ether, etc. and dodecylbenzenesulfonic acid). Then the solution is stirred well, and 40% emulsifiable concentrate of the present compound is obtained.

Formulation Example 2 Wettable Powder

To 40 parts of the present compound, 5 parts of Sorpol SM-200 is added, and the solution is mixed well. Then 20 parts of Carplex #80 (Trade mark registered by Shionogi; fine powders of synthetic hydrated silicon dioxide) and 35 parts of 300 mesh diatomaceous earth are added, and then the mixture is stirred with a juice mixer to obtain 40% wettable powder of the present compound.

Formulation Example 3 Granule

To 5 parts of the present compound, 5 parts of Toyolignin CT (Trade mark registered by Toyobo; lignin sulfonate) and 90 parts of GSM clay (Trade mark registered by Zieklite Mining Co., powdered quartz) are added, and the mixture is mixed sufficiently in a stirrer. Subsequently, water equivalent to 10% of the mixture is added and stirred. Then the mixture is processed to granules with granulator and the granules are air-dried to obtain 5% granules of the present compound.

Formulation Example 4 Dust Formulation

Five parts of the present compound is dissolved into 20 parts of acetone. Then 3 parts of Carplex #80 (as mentioned above), 0.3 part of PAP, and 91.7 parts of 300 mesh talc are added thereto. The mixture is mixed by stirring and acetone is removed by evaporation to obtain 5% dust formulation.

Formulation Example 5 Oil Spray

Twenty parts of the present compound is dissolved into 80 parts of kerosene to obtain 20% oil spray of each compound.

It is shown below by test examples that the present compound is useful as an active ingredient of insecticides, nematocides and acaricides. Unless otherwise specified herein, all the tests stated below were conducted three times. Compounds used as a control are shown by Compound symbol in Table 1.

Table 1

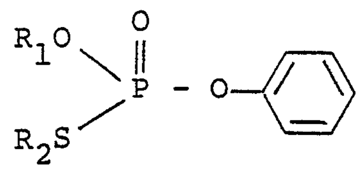

| Compound symbol | $R_1$ | $R_2$ | Remark |
|---|---|---|---|
| (A) | $C_2H_5$ | $n-C_3H_7$ | Compound described in Japanese Patent publication No. 21768/1974 |
| (B) | $C_2H_5$ | $i-C_3H_7$ | Compound described in U.S. Patent No. 4242333 |
| (C) | $C_2H_5$ | $s-C_4H_9$ | Compound described in U.S. Patent No. 4028438 |

Test Example 1

The emulsifiable concentrate of each test compound formulated according to Formulation example 1 was diluted with water, and 5 ml of the resulting aqueous dilute liquor was mixed with 600 g of soil contaminated with root-knot nematodes (Meloidogyne sp.) to make the concentration of active ingredient in soil 4 or 1 ppm. The soil was placed in a polyethylene cup of 12 cm in diameter and 8 cm in height, and three tomato plants of 3 to 4 leaf stage were planted. Three weeks thereafter, the degree of root-knot was observed with the naked eye, and classified into the following five levels; -, - to +, +, ++ , +++ . The results are shown in Table 2.

| Level | Degree of root-knot |
|---|---|
| - | No settlement |
| - to + | Not more than 10% as compared with untreated plot |
| + | 10% - 40% as compared with untreated plot |
| ++ | 40% - 80% as compared with untreated plot |
| +++ | The same as or more than untreated plot |

Table 2

| Test compound | Extent of settlement concentration in the soil (ppm) | |
|---|---|---|
| | 4 | 1 |
| present compound | - | - to + |
| (B) | + | +++ |
| (C) | - to + | +++ |

Test Example 2

The emulsifiable concentrate of each test compound formulated according to Formulation example 1 was diluted with water, and 5 ml of the resulting aqueous dilute liquor was mixed with 50 g of soil to make the concentration of active ingredient in soil 1 ppm. The soil was then placed in a polyethylene cup of 5.6 cm in diameter and 5.8 cm high, and two pieces of corn having roots of 2 to 3 cm long were planted. At the same time, ten third instar larvae of southern corn rootworm (Diabrotica undecimpunctata howardi BABER) were liberated in the cup. Two days after liberation, the number of the dead and alive larvae was counted to obtain mortality (%). The results are shown in Table 3.

Table 3

| Test Compound | Mortality (%) |
|---|---|
| Present compound | 100 |
| (A) | 70 |
| (B) | 0 |

Test Example 3

Female adults of carmine spider mite (Tetranychus cinnabarinus) were made parasitic on the leaves of potted kidney bean in a primary leaf stage, at a rate of 10 adults per leaf, which had elapsed seven days after sowing, and stored in a constant-temperature room kept at 25°C. After six days, 15 ml of a dilute solution, previously prepared by diluting the emulsifiable concentrate of the following test compounds obtained according to Formulation example 1 with water so that the active ingredient concentration was 500 ppm, was sprayed thereon by means of a turn table. At the same time, soil drench was carried out with 2 ml of the dilute solution. After 8 days, the degree of damage of each kidney bean by mites was examined.

The degree of damage was classified into three stages, -, + and + +.

-: Little damage is observed.

+ : Slight damage is observed.

+ + : Same damage as in the untreated plot is observed.

The results are shown in Table 4.

Table 4

| Test compound | Degree of damage |
|---|---|
| Present compound | - |
| Chlorodimeform | + |

Test Example 4

After fasting of about 24 hours, ICR series mouse was weighed by an electronic balance. A stomack sound for mouse was attached to a syringe filled with test solution, the syringe end was slid to innermost of the mouse's throat to insert it to the stomack, and a definite amount of the test solution was injected. 4 Hours after the administration, a bait and water were given to the mouse for 7 days to observe a mortality (5 head per group). The results are shown in Table 5.

Table 5

| Test Compound | Mortality (%) at the dose of 100 mg/kg |
|---|---|
| Present compound | 0 |
| (A) | 100 |
| (B) | 100 |
| (C) | 100 |

## Claims

1. S-tert-butyl O-ethyl O-phenyl phosphorothiolate of the formula:

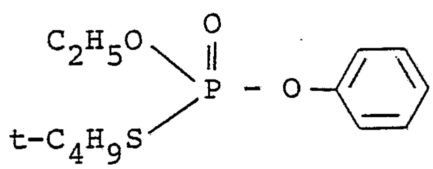

2. A method for producing S-tert-butyl O-ethyl O-phenyl phosphorothiolate of the formula:

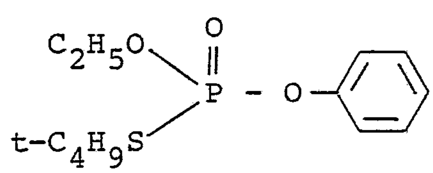

, which comprises treating O-ethyl O-phenyl phosphorochloridate with tert-butyl-mercaptan in a solvent in the presence of a base.

3. An insecticidal, nematocidal and acaricidal composition which comprises an insecticidally, nematocidally and acaricidally effective amount of S-tert-butyl O-ethyl O-phenyl phosphorothiolate, as an active ingredient, and an inert carrier.

4. A method for controlling insects, nematodes and acarids which comprises applying an insecticidally, nematocidally and acaricidally effective amount of S-tert-butyl O-ethyl O-phenyl phosphorothiolate to the insects, nematodes and acarids.

5. Use of the S-tert-butyl O-ethyl O-phenyl phosphorothiolate as an insecticide, nematocide and acaricide.

European Patent Office

# EUROPEAN SEARCH REPORT

Application Number

EP 88 30 0864

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | FR-A-1 567 444 (SUMITOMO CHEMICAL CO.) * Pages 37,38, example 1; page 1, lines 16-35 * | 1-5 | C 07 F 9/18<br>A 01 N 57/14 |
| Y | WO-A-8 404 308 (FMC CORP.) * Whole document * | 1-5 | |
| | | | TECHNICAL FIELDS SEARCHED (Int. Cl.4) |
| | | | C 07 F 9/00 |

The present search report has been drawn up for all claims

| Place of search | Date of completion of the search | Examiner |
|---|---|---|
| THE HAGUE | 22-04-1988 | BESLIER L.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)